(19) Europäisches Patentamt / European Patent Office / Office européen des brevets

(11) **EP 4 787 450 A1**

(12) **EUROPEAN PATENT APPLICATION**

(43) Date of publication:
05.08.2026 Bulletin 2026/32

(21) Application number: 26153206.3

(22) Date of filing: **21.01.2026**

(51) International Patent Classification (IPC):
*H01M 4/131* (2010.01)   *H01M 4/36* (2006.01)
*H01M 4/505* (2010.01)   *H01M 4/525* (2010.01)
*H01M 4/62* (2006.01)    *H01M 10/0525* (2010.01)
*H01M 10/42* (2006.01)

(52) Cooperative Patent Classification (CPC):
H01M 4/131; H01M 4/364; H01M 4/505;
H01M 4/525; H01M 4/62; H01M 10/0525;
H01M 10/4235; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.01.2025 JP 2025013170

(71) Applicant: Toyota Jidosha Kabushiki Kaisha
Toyota-shi, Aichi-ken 471-8571 (JP)

(72) Inventors:
• **OHSAWA, Ryosuke**
  **Toyota-shi, 471-8571 (JP)**
• **MAHARA, Yuji**
  **Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **CATHODE LAYER AND LITHIUM ION BATTERY**

(57)    A main object of the present disclosure is to provide a cathode layer with which the decrease in capacity of a lithium ion battery due to charge and discharge can be suppressed. The present disclosure achieves the object by providing a cathode layer to be used in a lithium ion battery, the cathode layer including: a cathode active material, and an oxygen storing and releasing material, wherein the cathode active material includes a crystalline primary particle containing **Li, TM,** which is a transition metal, and O; the oxygen storing and releasing material is an oxide including at least one element of Ce and Zr; and a content of the oxygen storing and releasing material in the cathode layer is more than 0.5 weight% and less than 7 weight%.

FIG. 1

EP 4 787 450 A1

## Description

Technical Field

The present disclosure relates to a cathode layer for a lithium ion battery, and a lithium ion battery.

Background Art

Cathode active materials including a nickel-based lithium metal composite oxide have been widely used (for example, refer to Patent Literatures 1 to 3).

Citation List

Patent Literatures

Patent Literature 1: Japanese Patent Application Laid-Open (JP-A) No. 2023-104990
Patent Literature 2: JP-A No. 2014-72072
Patent Literature 3: JP-A No. 2004-311408

Summary of Disclosure

Technical Problem

In the cathode active material including a lithium metal composite oxide, lithium ions may be taken out from the cathode active material and oxygen inside the cathode active material may be released during charge. As a result, along with charge and discharge of the battery, deterioration of the cathode active material may occur to decrease the reversible capacity of the battery. In particular, for example, when charge and discharge including a high potential region of 4.1 V or more, the reversible capacity easily decreases. Patent Literature 1 describes that the structure can be made stable even in the high potential region of 4.1 V or more by mixing large particles and small particles in the specified ratio, but there is still a room for improvement in suppressing the decrease in capacity.

The present disclosure has been made in view of the above circumstances, and a main object thereof is to provide a cathode layer for lithium ion battery, with which the decrease in capacity of the battery due to charge and discharge can be suppressed.

Solution to Problem

[1] A cathode layer to be used in a lithium ion battery, the cathode layer comprising:

a cathode active material, and an oxygen storing and releasing material, wherein
the cathode active material includes a crystalline primary particle containing Li, TM, which is a transition metal, and O;
the oxygen storing and releasing material is an oxide including at least one element of Ce and Zr; and
a content of the oxygen storing and releasing material in the cathode layer is more than 0.5 weight% and less than 7 weight%.

[2] The cathode layer according to [1], wherein the oxygen storing and releasing material is at least one kind of $CeO_2$, $ZrO_2$, and $Ce_pZr_{1-p}O_2$, in which $0 < p < 1$.
[3] The cathode layer according to [1] or [2], wherein the content of the oxygen storing and releasing material in the cathode layer is 1 weight% or more and 5 weight% or less.
[4] The cathode layer according to any one of [1] to [3], wherein the primary particle includes at least Ni as the TM.
[5] The cathode layer according to any one of [1] to [4], wherein the primary particle contains at least one kind of Co and Mn as the TM.
[6] The cathode layer according to [4], wherein a molar ratio of the Ni to the TM is 0.5 or more.
[7] The cathode layer according to any one of [1] to [6], wherein the cathode active material includes a single crystalline active material configured by the primary particle.

[8] The cathode layer according to [7], wherein a particle size of the primary particle configuring the single crystalline active material is 0.5 $\mu$m or more.

[9] The cathode layer according to [7] or [8], wherein a ratio of the single crystalline active material in the cathode active material is 50 weight% or more.

[10] The cathode layer according to any one of [1] to [9], wherein the primary particle includes a layered rock salt type crystal structure.

[11] The cathode layer according to any one of [1] to [10], wherein the primary particle includes a composition represented by $Li_xNi_aCo_bMn_cO_y$, in which $0.1 \leq x \leq 1.5$, $0.5 \leq a \leq 1.0$, $0 \leq b \leq 0.3$, $0 \leq c \leq 0.3$, $a+b+c = 1.0$, and $1.5 \leq y \leq 2.1$.

[12] A lithium ion battery comprising the cathode layer according to any one of [1] to [11].

Advantageous Effects of Disclosure

The present disclosure can provide a cathode layer for lithium ion battery, with which the decrease in capacity of the battery due to charge and discharge can be suppressed.

Brief Description of Drawings

FIG. 1 is a schematic view exemplifying the cathode active material and the oxygen storing and releasing material in the present disclosure.
FIG. 2 is a schematic cross-sectional view exemplifying the lithium ion battery in the present disclosure.
FIG. 3 is a schematic cross-sectional view exemplifying the lithium ion battery in the present disclosure.

Description of Embodiments

The present disclosure will be hereinafter explained in details with reference to drawings. Each drawing described as below is an example, and the size and the shape of each portion may be exaggerated in order to be understood easily.

**A.** Cathode layer

The cathode layer in the present disclosure is a cathode layer to be used in a lithium ion battery, the cathode layer including: a cathode active material, and an oxygen storing and releasing material, wherein the cathode active material includes a crystalline primary particle containing Li, TM, which is a transition metal, and O; the oxygen storing and releasing material is an oxide including at least one element of Ce and Zr; and a content of the oxygen storing and releasing material in the cathode layer is more than 0.5 weight% and less than 7 weight%.

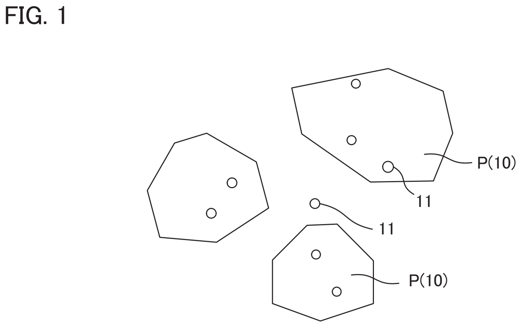

FIG. 1 is a schematic view exemplifying the cathode active material and the oxygen storing and releasing material in the present disclosure. The cathode layer includes, as exemplified in FIG. 1, a cathode active material 10 including a crystalline primary particle P containing Li, TM, which is a transition metal, and O; and an oxygen storing and releasing material 11. Incidentally, the primary particle P shown in FIG. 1 configures the single crystalline active material.

As described above, in the cathode active material including a lithium metal composite oxide, lithium ions may be taken out from the cathode active material and oxygen inside the cathode active material may be released during charge. While the cathode active material including Ni is expected to increase the discharge capacity, the above described release of oxygen is remarkable. Also, when a battery including the layered rock salt type cathode active material including Ni is charged, it has been known that lithium ions are taken out from the cathode active material, and the crystal structure contracts in a c-axis direction.

In contrast, in the present disclosure, the cathode layer includes the oxygen storing and releasing material in the content in the specified range, and thus oxygen released from the cathode active material during charge is absorbed by the oxygen storing and releasing material. Further, the oxygen storing and releasing material releases oxygen during discharge and returns to the cathode active material. Thereby, deterioration of the cathode active material due to charge and discharge of the battery can be inhibited, and the decrease in capacity can be suppressed. In particular, even when charge and discharge including the high potential region is performed, the decrease in capacity can be suppressed. When the content of the oxygen storing and releasing material is too little, deterioration of the cathode active material due to charge and discharge cannot be inhibited, and the decrease in capacity cannot be suppressed. Meanwhile, when the content of the oxygen storing and releasing material is too much, the content of the cathode active material becomes relatively little, and the battery with sufficient capacity cannot be obtained.

The cathode layer will be hereinafter described in details.

## 1. Cathode active material

The cathode active material in the present disclosure includes a crystalline primary particle containing Li, TM, which is a transition metal, and O.

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and **W**.

The primary particle preferably contains at least Ni as the TM. The reason therefor is to obtain a cathode active material with excellent capacity properties. The molar ratio of Ni to the TM (all the transition metals included in the primary particle) is, for example, 0.25 or more, may be 0.33 or more, and may be 0.50 or more, may be 0.70 or more, and may be 0.80 or more. The capacity properties improve when the ratio of Ni is increased.

The primary particle preferably contains at least one kind of Co and Mn as the TM.

The primary particle may or may not contain Co as the TM. The molar ratio of Co to the TM (all the transition metals included in the primary particle) is, for example, 0 or more, may be 0.05 or more, and may be 0.10 or more. Meanwhile, the molar ratio of Co to the TM is, for example, 0.40 or less and may be 0.20 or less.

The primary particle may or may not contain Mn as the TM. The molar ratio of Mn to the TM (all the transition metals included in the primary particle) is, for example, 0 or more, may be 0.05 or more, and may be 0.10 or more. Meanwhile, the molar ratio of Mn to the TM is, for example, 0.40 or less and may be 0.20 or less.

The primary particle preferably contains at least one kind of Ni, Co, and Mn as the TM. The total molar ratio of Ni, Co, and Mn to the TM (all the transition metals included in the primary particle) is, for example, 0.80 or more, may be 0.90 or more, and may be 0.95 or more. Incidentally, "the total of Ni, Co, and Mn" includes the case where the ratio of one kind or two kinds of Ni, Co, and Mn is **0**.

The primary particle may contain other metal M[1] (including semimetal) other than Li and the TM, in addition to Li and the TM. Examples of the other metal M[1] may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, and may be a composition represented by the general formula $Li_x Ni_a Co_b Mn_c O_y$, in which $0.1 \leq x \leq 1.5$, $0.5 \leq a \leq 1.0$, $0 \leq b \leq 0.3$, $0 \leq c \leq 0.3$, $a+b+c = 1.0$, and $1.5 \leq y \leq 2.1$.

The x signifies the molar ratio of Li to the total of Ni, Co, and Mn, and is usually 0.1 or more, may be 0.4 or more, may be 0.6 or more, may be 0.8 or more, may be 1.0 or more, and may be 1.05 or more. Meanwhile, the x is usually 1.5 or less, may be 1.4 or less, and may be 1.2 or less.

The y signifies the molar ratio of O to the total of Ni, Co, and Mn, and is usually 1.5 or more, may be 1.6 or more, may be 1.7 or more, may be 1.8 or more, and may be 1.9 or more. Meanwhile, the y is usually 2.1 or less, and may be 2.0 or less.

The "a" signifies the molar ratio of Ni to the total of Ni, Co, and Mn, and is usually 0.50 or more, may be 0.6 or more, may be 0.7 or more, may be 0.8 or more, and may be 0.85 or more. Meanwhile, the "a" is usually 1.0 or less, and may be 0.9 or less.

The b signifies the molar ratio of Co to the total of Ni, Co, and Mn, and is usually 0 or more, may be 0.01 or more, may be 0.02 or more, may be 0.03 or more, may be 0.04 or more, may be 0.05 or more, may be 0.06 or more, may be 0.07 or more, and may be 0.075 or more. Meanwhile, the b is usually 0.30 or less, may be 0.25 or less, and may be 0.20 or less, may be 0.15 or less, may be 0.10 or less, may be 0.09 or less, and may be 0.08 or less.

The c signifies the molar ratio of Mn to the total of Ni, Co, and Mn, and is usually 0 or more, may be 0.01 or more, may be 0.02 or more, may be 0.03 or more, may be 0.04 or more, may be 0.05 or more, may be 0.06 or more, may be 0.07 or more, and may be 0.075 or more. Meanwhile, the c is usually 0.30 or less, may be 0.25 or less, may be 0.20 or less, may be 0.15 or less, may be 0.10 or less, may be 0.09 or less, and may be 0.08 or less.

In the formula, the molar ratio "a" of Ni, the molar ratio b of Co, and the molar ratio c of Mn satisfy the relation of $a+b+c = $ **1.0**.

The cathode active material in the present disclosure has a composition represented by, for example, $LiNi_{0.90}Mn_{0.10}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, or $LiNi_{0.9}Co_{0.05}Mn_{0.05}O_2$.

In the present disclosure, the composition of the cathode active material can be determined by, for example, dissolving the cathode active material in an acid, and measuring that by an ICP emission spectral analysis method (ICP-OES).

Examples of the crystal structure of the primary particle may include a layered rock salt type and a spinel type, and the layered rock salt type is preferable. The crystal structure of the layered rock salt type usually belongs to the space group R-3m.

The cathode active material in the present disclosure usually includes a single crystalline active material configured by the primary particle. The single crystalline active material means that it is not a so-called polycrystalline active material (active material wherein multiple of primary particles aggregate without gaps). The single crystalline active material usually does not aggregate, and is present as one independent particle. In the single crystalline active material, it is preferable that the particle boundary is not confirmed in a SEM observation (magnification of about 10 thousand times to 30 thousand times). The single crystalline active material has an advantage such that the deterioration over time is less compared to the polycrystalline active material.

The particle size of the primary particle is, for example, 0.5 $\mu$m or more, may be 0.6 $\mu$m or more, may be 0.8 $\mu$m or more, and may be 1.0 $\mu$m or more. When the particle size of the primary particle is too small, the particle may not grow enough, and it may be difficult to be produced as a single crystal. Meanwhile, the particle size of the primary particle is, for example, 10 $\mu$m or less, and may be 5 $\mu$m or less. The particle size of the primary particle is the maximum length of the diameter in the cross-section image obtained by a scanning electron microscope (SEM).

The outer shape of the primary particle is, for example, a polyhedron shape. The outer shape of the primary particle may be, for example, a hexahedron shape, or an octahedron shape.

The cathode active material in the present disclosure may or may not include a secondary particle. The secondary particle refers to a polycrystalline active material wherein multiple of primary particles aggregate without gaps. In these secondary particles, oxygen released in the primary particle present inside among the primary particles configuring the secondary particle is not easily stored by the oxygen storing and releasing material, and the deterioration inside the secondary particle is not easily suppressed. On the other hand, oxygen released from the single crystalline active material is easily absorbed by the oxygen storing and releasing material, and oxygen released from the oxygen storing and releasing material is easily taken into the single crystalline active material. As a result, when the cathode active material includes the single crystalline active material, the effect of the oxygen storing and releasing material is sufficiently exhibited. The proportion of the single crystalline active material in the cathode active material is, for example, 50 weight% or more, may be 60 weight% or more, may be 70 weight% or more, may be 80 weight% or more, and may be 90 weight% or more. Meanwhile, the proportion of the single crystalline active material in the cathode active material is, for example, 100 weight% or less.

The content of the cathode active material in the cathode layer is, for example, 20 weight% or more, may be 30 weight% or more, may be 40 weight% or more, may be 50 weight% or more, may be 60 weight% or more, and may be 70 weight% or more. When the content of the cathode active material is too little, there is a possibility that sufficient energy density may not be obtained. Meanwhile, the content of the cathode active material is, for example, 95 weight% or less, may be 90 weight% or less, and may be 80 weight% or less. When the content of the cathode active material is too much, there is a possibility that the ion conductivity and the electron conductivity in the cathode layer may be relatively degraded. The content of the cathode active material in the cathode layer refers to the content of the cathode active material when the overall solid content of the cathode layer is regarded as 100 weight%.

Method for producing cathode active material

The cathode active material in the present disclosure can be produced by performing a step of synthesizing a transition metal hydroxide, a burning step of performing a heating treatment to a mixture of the transition metal hydroxide, a Li source, and an ordinary temperature molten salt (flux), and a crushing step of crushing a burned product.

(a) Transition metal hydroxide synthesizing step

The transition metal hydroxide is a precursor of the cathode active material. The transition metal hydroxide may be the one obtained as a deposit by dissolving and crystallizing multiple kinds of transition metal compounds in a solvent.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include $NiSo_4$, and $Ni(NO_3)_2$. Examples of the Co source may include $CoSO_4$, $Co(NO_3)_2$, and $Co(NO_3)_3$. Examples of the Mn source may include $MnSO_4$, and $Mn(NO_3)_2$. The composition of the raw material aqueous solution is appropriately adjusted in accordance with the intended cathode active material.

Next, in a reaction container, a fixed amount of $NH_3$ aqueous solution is put in, substituted with nitrogen by stirring with means such as a stirrer, so as to make non-oxidizing atmosphere. Sequentially, a sodium hydroxide aqueous solution is added to the reaction container, and the raw material aqueous solution is dropped into the reaction container while pH is maintained alkaline and controlling temperature, and thereby a reaction solution is formed. The pH of the reaction solution is adjusted, and thus the deposit (crystallized product) of the transition metal hydroxide can be formed.

After completion of the depositing reaction, temporary burning is performed. As the conditions of the temporary burning, the temperature is, for example, 120°C or more and 220°C or less, the time is, for example, 4 hours or more and 10 hours or less, and the pressure is, for example, 0.2 MPa or more and 1.0 MPa or less.

After the temporary burning, the product is washed by water and filtrated to take out the transition metal hydroxide, and a drying treatment is performed. The drying temperature is, for example, 100°C or more and 150°C or less. The drying time is, for example, 8 hours or more and 24 hours or less.

(b) Burning step

The obtained transition metal hydroxide, a Li source, and an ordinary molten salt (flux) are mixed to obtain a mixture. The Li source is a lithium compound and examples thereof may include at least one kind selected from lithium carbonate, lithium nitrate, lithium acetate, lithium hydroxide, lithium oxide, and lithium chloride. In the present disclosure, the ordinary temperature molten salt is added in addition to the Li source at the time of burning, and thus the above described single crystalline active material is obtained. The method for mixing the transition metal hydroxide, the Li source and the ordinary temperature molten salt may be any method. For example, they may be mixed by a mortar. As the ordinary temperature molten salt, a lithium compound that is the same kind as the Li source may be used. In this case, the substance amount of lithium in the lithium compound is excessively blended compared to the total substance amount of each transition metal kind of the transition metal hydroxide, and thus the excessive lithium compound forms the molten salt; thereby, the single crystallization of the cathode active material is promoted. In the present disclosure, the mixture may contain a lithium hydroxide as the Li source and the ordinary temperature molten salt.

The ratio of the Li source and the transition metal hydroxide in the mixture is set so that the ratio (molar ratio) of lithium and the transition metal kind to the total amount of lithium and the transition metal kind (such as Ni, Co, and Mn) in the intended cathode active material becomes, for example, equal to the ratio (molar ratio) of lithium and the transition metal kind of the Li source to the total amount of lithium in the Li source and each transition metal kind of the transition metal hydroxide in the mixture. The ratio of the ordinary temperature molten salt (flux) in the mixture is preferably the amount with which the ratio (molar ratio) of Li in the ordinary molten salt to the total amount of the transition metal kind included in the transition metal hydroxide becomes, for example, 0.1 or more, 0.5 or more, or 0.6 or more. The ratio (molar ratio) of Li included in the Li source and the molten salt to the total amount of the transition metal kind included in the transition metal hydroxide may be, for example, 1.1 or more, may be 1.5 or more, and may be 1.6 or more. Meanwhile, the ratio (molar ratio) of Li included in the Li source and the molten salt to the total amount of the transition metal kind included in the transition metal hydroxide may be, for example, 2.0 or less and may be 1.8 or less. There are no particular limitations on the method for mixing, and known methods can be used.

Next, a heating treatment is performed to the mixture. For the heating treatment, any heating treatment furnace can be used. For example, a furnace such as a muffle furnace and an electronic furnace may be used. The treatment temperature (burning temperature) is, for example, 650°C or more and 1100°C or less, and may be 700°C or more and 900°C or less. The treatment time (burning time) is, for example, 5 hours or more and 15 hours or less, and may be 8 hours or more and 12 hours or less.

Next, the burned product is crushed to the specified particle size, such as an average particle size of 0.2 μm or less. This crushing may be crushing using an agate mortar. Next, the crushed product is dispersed in pure water and stirred to be washed. The slurry after the washing is filtrated, rinsed, and vacuum dried.

Post-annealing (re-burning) may be performed to the obtained dry powder. The post-annealing is performed under an oxygen atmosphere. The burning temperature in the post-annealing is, for example, 500°C or more and 800°C or less, and the burning time is, for example, 1 hour or more and 5 hours or less.

(c) Crushing step

Next, the burned product is crushed and cracked to the specified particle size. This cracking may be cracking using an agate mortar, and may be cracking using a mill such as a lab mill. After cracking, a treatment such as a classification treatment and a sizing treatment may be further performed. From the above, the cathode active material with the specified composition including the single crystalline active material is obtained.

2. Oxygen storing and releasing material

The cathode layer in the present disclosure includes an oxygen storing and releasing material. As shown in FIG.

1, oxygen storing and releasing material 11 is preferably adhered to at least a part of a surface of the primary particle P. The oxygen storing and releasing material is an oxide including at least one element of Ce and Zr. The oxygen storing and releasing material may include one kind or two kinds or more of additional element. The additional element is a metal element other than Ce and Zr, and examples thereof may include Ti, Y, Nd, and La.

Examples of the oxygen storing and releasing material may include $CeO_2$, $ZrO_2$, a composite oxide of Ce and Zr ($Ce_pZr_{1-p}O_2$ ($0 < p < 1$), and a composite oxide of Ce, Zr, and an additional element. Among those, $CeO_2$, $ZrO_2$, and $Ce_pZr_{1-p}O_2$ are preferable. The p in $Ce_pZr_{1-p}O_2$ signifies the ratio of the Ce element, which is $0 < p < 1.0$, may be $0.4 < p < 1.0$, and may be $0.5 \leq p \leq 0.9$. These oxygen storing and releasing materials may be used alone in one kind, and may be used in combination of two kinds or more.

Incidentally, in the later described Examples, $CeO_2$ was used as the oxygen storing and releasing material, but it is presumed that the similar effect can be obtained with $ZrO_2$, which is conventionally known as the oxygen storing and releasing material, with $Ce_pZr_{1-p}O_2$ ($0 < p < 1$), which is a composite oxide of Ce and Zr, and with a composite oxide of Ce, Zr, and an additional element.

In the present disclosure, the content of the oxygen storing and releasing material in the cathode layer is, usually more than 0.5 weight%, may be 0.6 weight% or more, may be 0.8 weight% or more, may be 1 weight% or more, and may be 3 weight% or more. When the content of the oxygen storing and releasing material in the cathode layer is too little, deterioration of the cathode active material cannot be inhibited, and the decrease in capacity along with charge and discharge cannot be suppressed. Meanwhile, the content of the oxygen storing and releasing material in the cathode layer is usually less than 7 weight%, may be 5 weight% or less, and may be 3 weight% or less. When the content of the oxygen storing and releasing material in the cathode layer is too much, the content of the cathode active material becomes relatively little, and sufficient battery capacity cannot be obtained. The content of the oxygen storing and releasing material in the cathode layer refers to the content of the oxygen storing and releasing material when the overall solid content of the cathode layer is regarded as 100 weight%.

The oxygen storing and releasing material is, for example, in a granular shape. The particle size of the oxygen storing and releasing material is, for example, 10 $\mu$m or less, 1 $\mu$m or less, 0.4 $\mu$m or less, may be 0.3 $\mu$m or less, may be 0.1 $\mu$m or less, and may be 0.05 $\mu$m or less. Meanwhile, the particle size of the oxygen storing and releasing material may be 0.01 $\mu$m or more. The particle size of the oxygen storing and releasing material is, for example, smaller than the particle size of the primary particle. Incidentally, the oxygen storing and releasing material may be present as an aggregate of fine particles. The particle size may be a particle size of the primary particle of the oxygen storing and releasing material, and may be a particle size of the aggregate.

As shown in FIG. 1, oxygen storing and releasing material 11 is preferably adhered to at least a part of a surface of the primary particle 10. Also, the cathode layer 1 may include oxygen storing and releasing material 11 not adhered to the surface of the primary particle 10. Whether the cathode layer contains the oxygen storing and releasing material or not can be confirmed by a scanning electron microscope and an energy dispersive X-ray analysis device.

Examples of the method for obtaining the cathode layer containing the oxygen storing and releasing material and the cathode active material may include a method in which the oxygen storing and releasing material is mixed with the cathode active material before the post-annealing in the production step of the cathode active material, and a method in which the oxygen storing and releasing material is mixed with another cathode layer material at the time of forming the cathode layer. Among those, the method of mixing with another cathode layer material at the time of forming the cathode layer is preferable. This is because the post-annealing in the production step of the cathode active material is often performed under an oxygen atmosphere, and thus the oxygen storing and releasing material absorbs oxygen at the time of the post-annealing to decrease the effect of the oxygen storing and releasing material.

3. Cathode layer

The cathode layer includes the above described cathode active material and oxygen storing and releasing material, and may further include a material such as a conductive material and a binder as required. The cathode layer may contain an electrolyte. The electrolyte is, for example, the later described liquid electrolyte. Meanwhile, the cathode layer may contain a solid electrolyte.

Examples of the conductive material may include graphite, acetylene black (AB), Ketjen black (registered trademark), vapor grown carbon fiber (VGCF), carbon nanotube (CNT), and graphene flake (GF). The content of the conductive material in the cathode layer to 100 mass parts of the cathode active material is, for example, 0.1 mass parts or more and 10 mass parts or less.

Examples of the binder may include polyvinylidene fluoride (PVdF), a vinylidene fluoride - hexafluoro propylene copolymer (PVdF-HFP), polytetra fluoroethylene (PTFE), carboxymethylcellulose (CMC), polyacrylic acid (PAA), polyvinyl alcohol (PVA), polyvinyl pyrrolidone (PVP), polyoxyethylene alkylether, and derivatives of these. The content of the binder in the cathode layer to 100 mass parts of the cathode active material is, for example, 0.1 mass parts or more and 10 mass parts or less.

The thickness of the cathode layer is, for example, 0.1 $\mu$m or more and 1000 $\mu$m or less, may be 1 $\mu$m or more and 500 $\mu$m or less, and may be 30 $\mu$m or more and 100 $\mu$m or less.

The cathode layer can be formed by the following method. For example, the cathode active material including the primary particle, the oxygen storing and releasing material and a solvent are mixed to obtain a slurry for cathode layer, and a treatment of applying the slurry for cathode layer on the cathode current collector is performed. As described above, the oxygen storing and releasing material may be mixed before the post-annealing in the production step of the cathode active material. After that, as required, a drying treatment and a pressing treatment are performed as required to form a cathode layer. Examples of the pressing treatment may include a roller pressing and a flat plate pressing.

Examples of the solvent may include N-methyl pyrrolidone (NMP), tetralin, diisobutyl ketone, butyl butyrate, mesitylen, heptane, dibutyl ether, decane, dodecane, isodecane, and toluene. These solvent may be used alone in one kind, and may be used in combination of two kinds or more.

B. Lithium ion battery

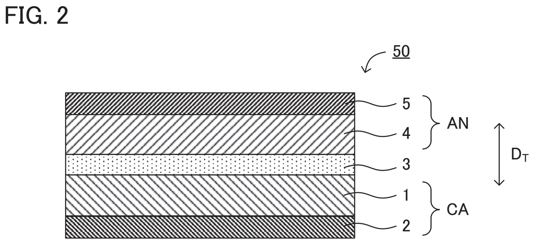

The lithium ion battery in the present disclosure includes the above described cathode layer for lithium ion battery. In other words, the present disclosure can provide a battery wherein a cathode layer, an electrolyte layer, and an anode layer are layered in this order, and the cathode layer is the above described cathode layer. FIG. 2 is a schematic cross-sectional view exemplifying the lithium ion battery in the present disclosure. The lithium ion battery 50 shown in FIG. 2 includes layers in the order of anode current collector 5, anode layer 4, electrolyte layer 3, cathode layer 1, and cathode current collector 2 along with thickness direction $D_T$, wherein the anode current collector 5 and the anode layer 4 configure anode AN, and the cathode layer 1 and the cathode current collector 2 configure cathode CA.

According to the present disclosure, the lithium ion battery includes the above described cathode lay, and thus the decrease in capacity of the battery due to charge and discharge can be suppressed.

1. Cathode layer

The cathode layer is in the same contents as those described in "A. Cathode layer".

2. Anode layer

The anode layer contains at least an anode active material, and may contain at least one of an electrolyte, a conductive material and a binder, as required. Examples of the anode active material may include a silicon-based active material such as Si and a Si alloy, tin and a tin alloy, and silicon oxide; a carbon-based active material such as graphite and hard carbon; various oxide-based active materials such as lithium titanate; and metal lithium, and a lithium alloy.

The anode active material may be in a granular shape, and may be in a sheet shape. The average particle size of the anode active material may be, for example, 1 $\mu$m or more. The average particle size of the anode active material may be, for example, 30 $\mu$m or less.

Examples of the conductive material, the binder, and the electrolyte used for the anode layer may include those described for the cathode layer above.

3. Electrolyte layer

The electrolyte layer is a layer formed between the cathode layer and the anode layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as $LiPF_6$, $LiBF_4$, $LiClO_4$, and $LiAsF_6$; and an organic lithium salt such as $LiCF_3SO_3$, $LiN(SO_2CF_3)_2$, $LiN(SO_2C_2F_5)_2$, and $LiC(SO_2CF_3)_3$.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl methyl carbonate (EMC). The non-aqueous solvent may be a mixture of cyclic carbonate including high dielectric constant and high viscosity such as EC and PC with chain carbonate including low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based liquid electrolyte such as lithiumbis(fluorosulfonyl)imide, and lithiumbis(trifluoromethanesulfonyl)imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic electrolyte such as a polymer electrolyte and a gel electrolyte; and an inorganic solid electrolyte such as a sulfide solid electrolyte, an oxide solid electrolyte, and a halide solid electrolyte.

4. Cathode current collector

Examples of the material for the cathode current collector may include SUS, Cr, Au, Pt, Zn, aluminum, copper, nickel, iron, titanium, and carbon. The thickness of the cathode current collector is, for example, 0.1 $\mu$m or more and 100 $\mu$m or less. Examples of the shape of the cathode current collector may include a foil shape, a mesh shape, and a porous shape. There are no particular limitations on the shape of the cathode current collector in a plan view, and examples thereof may include a circle shape, an oval shape, a square shape, and any polygonal shapes. The configuration of the cathode current collector may be the one in which a shock absorbing layer, an elastic layer, or a PTC (Positive Temperature Coefficient) thermistor layer is arranged on its surface.

**5.** Anode current collector

Examples of the material for the anode current collector may include SUS, aluminum, copper, nickel, iron, titanium, and carbon. Also, the thickness of the anode current collector varies depending on the shape, but for example, it is 1 $\mu$m or more and 50 $\mu$m or less. The shape of the anode current collector may be a foil shape or a plate shape. There are no particular limitations on the shape of the anode current collector in a plan view, and examples thereof may include a circle shape, an oval shape, a square shape, and any polygonal shapes. The configuration of the anode current collector may be the one in which a shock absorbing layer, an elastic layer, or a PTC thermistor layer is arranged on its surface.

6. Lithium ion battery

The battery in the present disclosure may include an outer package for storing a power generation elements (the cathode layer, the electrolyte layer, and the anode layer). Examples of the outer package may include a case type outer package and a laminate type outer package.

The lithium ion battery in the present disclosure is usually a secondary battery. When a set of the cathode layer, the electrolyte layer and the anode layer is regarded as a power generating unit, the lithium ion battery in the present disclosure may be a single battery including just one of the power generating unit, and may be a layered battery including two or more thereof. The layered battery may be a monopolar layered battery (layered battery connected in parallel), and may be a bipolar layered battery (layered battery connected in series).

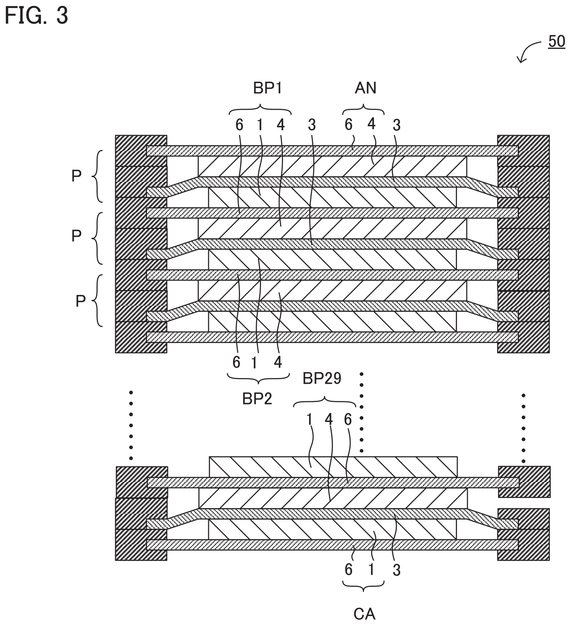

FIG. 3 is a schematic cross-sectional view exemplifying a case where the lithium ion battery in the present disclosure is a bipolar battery. Lithium ion battery 50 shown in FIG. 3 includes a plurality of layered power generating unit P. The power generating unit P includes cathode layer 1, anode layer 4, and electrolyte layer 3 arranged between the cathode layer 1 and the anode layer 4. The lithium ion battery 50 shown in FIG. 3 includes bipolar electrodes BP (from BP 1 to BP 29) as the electrode. Further, the lithium ion battery 50 includes cathode side end electrode CA and anode side end electrode AN. The bipolar electrode BP includes current collector 6, cathode layer 1, and anode layer 4. The cathode layer 1 is arranged on one surface of the current collector 6, and the anode layer 4 is arranged on the other surface of the current collector 6. The cathode side end electrode CA includes current collector 6 and cathode layer 1. This cathode layer 1 is arranged on one surface of the current collector 6. The anode side end electrode AN includes current collector 6 and anode layer 4. This anode layer 4 is arranged on one surface of the current collector 6.

The lithium ion battery 50 in the present disclosure may include just one of the bipolar electrode BP, and may include two or more thereof. Meanwhile, the battery in the present disclosure may not include the bipolar electrode.

The application of the lithium ion battery is not particularly limited, and examples thereof may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Comparative Example 1]

<Synthesis of cathode active material>

A cathode active material having the composition represented by $LiNi_{0.90}Co_{0.05}Mn_{0.05}O_2$ was obtained by the method shown below.

<Preparation of raw material aqueous solution>

First, $NiSO_4$, $CoSO_4$, and $MnSO_4$ were dissolved in an ion exchanged water to prepare a raw material aqueous solution. The ratio (molar ratio) of Ni, Co, and Mn in the raw material aqueous solution was adjusted to be Ni : Co : Mn = 90 : 5 : 5. The concentration (molar number of raw materials (all solutes) to the raw material aqueous solution) of the raw material aqueous solution was 0.2 mol%.

<Dehydration and temporary burning>

In a reaction container fixed amount of $NH_3$ aqueous solution was put in, and substituted with nitrogen by stirring with a stirrer. In the reaction container, NaOH was added to adjust the pH of the aqueous solution to alkali. The pH in the reaction container was maintained to be constant, and the raw material aqueous solution was dropped while controlling the temperature to deposit a transition metal hydroxide. After the deposition reaction completed, dehydration and temporary burning were performed to the deposit in the below temperature and pressure conditions.

- Temperature : 120°C
- Time: 8 hours
- Pressure: 0.2 MPa

<Collection of precursor>

The deposit was washed with water after the temporary burning. The deposit washed with water was filtrated to take out the transition metal hydroxide. Next, the product was dried at 110°C for 12 hours to evaporate moisture (dried product). Thereby, a precursor was prepared.

<Mixture of Li raw material>

The obtained precursor (transition metal hydroxide) and a lithium compound (LiOH) as a Li source were mixed with a mortar so that the ratio (molar ratio) of Li to the total amount of the transition metal kind included in the transition metal hydroxide became 1.0. Further, the lithium compound (LiOH) as a molten salt was mixed so that the ratio (molar ratio) of Li to the total amount of the transition metal kind included in the transition metal hydroxide became 0.6. In other words, the total addition amount of LiOH was made so that the ratio (molar ratio) of Li included in LiOH to the total amount of the transition metal kind included in the transition metal hydroxide was 1.6. Thereby, at the time of burning, the excessive lithium compound forms the molten salt to promote the single crystallization of the cathode active material.

<Burning>

A heating treatment (burning) was performed to the mixture. Burning was performed in a muffle furnace at 780°C for 12 hours (burning step). Next, the burned product was crushed with an agate mortar to the particle size of 0.2 mm or less, and then dispersed in a pure water of 500 mL and stirred hard for one minute to obtain a slurry. The slurry was filtrated with a buchner funnel and a filter paper, rinsed with pure water of 500 mL, and the obtained cake was vacuum dried at 90°C. The obtained dry powder was burned under oxygen flow at 500°C for 3 hours (post annealing). The burned product was crushed with an agate mortar, and cracked to the specified particle size (crushing). Thereby, a cathode active material having a composition represented by $LiNi_{0.90}Co_{0.05}Mn_{0.05}O_2$ was obtained.

[Production of cathode]

A slurry for cathode layer including the above particle as the cathode active material and N-methyl pyrrolidone (NMP) as a solvent was applied on a metal foil that is a cathode current collector, using a film applicator with film thickness adjusting function (from Allgood Corporation). After that, a drying treatment was performed on a hotplate at 80°C for 5 minutes to let out the NMP, and thereby a cathode layer was formed on the cathode current collector. Thereby, a cathode including a cathode current collector and a cathode layer was obtained.

[Production of battery]

An anode mixture paste including a natural graphite that is an anode active material was applied on a surface of a metal foil that is an anode current collector using a film applicator with film thickness adjusting function (from Allgood Corporation). After that, the product was dried by a dryer at 80°C for 5 minutes, and an anode including an anode layer was produced on the anode current collector. $LiPF_6$ solution of 1 M containing $LiPF_6$ as an electrolyte, and ethylene carbonate (EC), dimethyl carbonate (DMC), and ethyl methyl carbonate (EMC) as a solvent in a ratio of EC/DMC/EMC = 3/4/3 vol%, was prepared as a liquid electrolyte. The cathode, a separator, and the anode were layered, the separator was impregnated with the liquid electrolyte, and a small size laminate cell in which power generating elements were stored in a pouch made of an Al laminate film, was produced.

[Example 1]

A cathode active material was produced in the same manner as in Comparative Example 1 except that $CeO_2$ (from Nanotec Corporation) was mixed with the dry powder before post annealing (re-burning) using an agate mortar so as to be 3 weight% to the cathode layer in the production step of the cathode active material, and a mixture of a cathode active material having the composition represented by $LiNi_{0.90}Co_{0.05}Mn_{0.05}O_2$, and $CeO_2$ was obtained. The obtained mixture was dispersed in a carbon tape, and observed with a scanning electron microscope, then, as shown in FIG. 1, it was confirmed that the oxygen storing and releasing material 11 was adhered to the surface of the primary particle 10 configuring the single crystalline active material. Also, element mapping of Ni and Ce was performed with an energy dispersive X-ray analysis device (EDX). As a result, it was confirmed that the oxygen storing and releasing material (Ce) was mainly adhered to the surface of the cathode active material (Ni). A slurry for cathode layer including the obtained mixture and the NMP solvent was applied on a metal foil that is a cathode current collector, using a film applicator with film thickness adjusting function (from Allgood Corporation), and a drying treatment was performed to obtain a cathode including the cathode current collector and the cathode layer. A laminate cell was obtained in the same manner as in Example 1 except that the obtained cathode layer was used.

[Examples 2 to 4, Comparative Examples 2 to 3]

After obtaining a cathode active material having the composition represented by $LiNi_{0.90}Co_{0.05}Mn_{0.05}O_2$, $CeO_2$ (from Nanotec Corporation) was mixed with the cathode active material and the NMP solvent so that the content of $CeO_2$ in the cathode layer respectively became the content shown in Table 1 to prepare a slurry for cathode layer. A laminate cell was obtained in the same manner as in Example 1 except that the obtained slurry for cathode layer was used.

[Evaluation]

A cycle test in the below conditions was performed to the laminate cells.

- Surrounding temperature : 60°C
- Cycle number: 100
- Current rate: 0.3 C
- Voltage range: from 4.25 V to 2.5 V

In the initial capacity test by the cycle test result, the electric capacity (mAh) obtained in the discharging step of the initial charge and discharge was divided by the weight (unit: g) of the materials for the cathode active material included in the electrode inside the laminate cell to calculate the initial discharge capacity (unit: $mAhg^{-1}$) per 1 g of the cathode active material. Similarly, the discharge capacity ($mAhg^{-1}$) after 100 cycles was calculated. Also, deterioration level when Comparative Example 1 is regarded as 1 was calculated. The results are shown in Table 1.

Deterioration level of each Example or Comparative Example = (Initial discharge capacity - Discharge capacity after 100 cycles) / (Initial discharge capacity of Comparative Example 1 - Discharge capacity of Comparative Example 1 after 100 cycles)

[Table 1]

| | Oxygen storing and releasing material | | After 100 cycles | |
|---|---|---|---|---|
| | Kind | Content [wt%] | Discharge capacity [mAhg$^{-1}$] | Deterioration level |
| Example 1 | $CeO_2$ | 3 | 168 | 0.89 |
| Example 2 | $CeO_2$ | 3 | 172 | 0.75 |
| Example 3 | $CeO_2$ | 1 | 170 | 0.86 |
| Example 4 | $CeO_2$ | 5 | 164 | 0.96 |
| Comp. Ex. 1 | None | - | 161 | 1.00 |
| Comp. Ex. 2 | $CeO_2$ | 0.5 | 158 | 1.10 |
| Comp. Ex. 3 | $CeO_2$ | 7 | 150 | 1.11 |

As shown in Table 1, it was confirmed that the decrease in capacity after 100 cycles was suppressed in the battery provided with the cathode layer including the oxygen storing and releasing material in the specified ratio (Example 1 to Example 4). In Example 1 and Example 2, the content of the oxygen storing and releasing material in the cathode layer was both 3 weight%, but the capacity deterioration level of Example 2 was lower. It is presumed that since the oxygen storing and releasing material of Example 1 stored oxygen at the time of post-annealing under the oxygen atmosphere, the oxygen storing and releasing effect at the time of charging and discharging the battery was lower than Example 2.

Reference Sings List

1      cathode layer
2      cathode current collector
3      electrolyte layer
4      anode layer
5      anode current collector
10     cathode active material
11     oxygen storing and releasing material
50     lithium ion battery

**Claims**

1.   A cathode layer to be used in a lithium ion battery, the cathode layer **characterized by** comprising:

     a cathode active material, and an oxygen storing and releasing material, wherein
     the cathode active material includes a crystalline primary particle containing Li, TM, which is a transition metal, and O;
     the oxygen storing and releasing material is an oxide including at least one element of Ce and Zr; and
     a content of the oxygen storing and releasing material in the cathode layer is more than 0.5 weight% and less than 7 weight%.

2.   The cathode layer according to claim 1, **characterized in that** the oxygen storing and releasing material is at least one kind of $CeO_2$, $ZrO_2$, and $Ce_pZr_{1-p}O_2$, in which $0 < p < 1$.

3.   The cathode layer according to claim 1, **characterized in that** the content of the oxygen storing and releasing material in the cathode layer is 1 weight% or more and 5 weight% or less.

**4.** The cathode layer according to claim 1, **characterized in that** the primary particle includes at least Ni as the TM.

**5.** The cathode layer according to claim 4, **characterized in that** the primary particle contains at least one kind of Co and Mn as the TM.

**6.** The cathode layer according to claim 4, **characterized in that** a molar ratio of the Ni to the TM is 0.5 or more.

**7.** The cathode layer according to claim 1, **characterized in that** the cathode active material includes a single crystalline active material configured by the primary particle.

**8.** The cathode layer according to claim 7, **characterized in that** a particle size of the primary particle configuring the single crystalline active material is 0.5 $\mu$m or more.

**9.** The cathode layer according to claim 7, **characterized in that** a ratio of the single crystalline active material in the cathode active material is 50 weight% or more.

**10.** The cathode layer according to claim 1, **characterized in that** the primary particle includes a layered rock salt type crystal structure.

**11.** The cathode layer according to claim 1, **characterized in that** the primary particle includes a composition represented by $Li_xNi_aCo_bMn_cO_y$, in which $0.1 \leq x \leq 1.5$, $0.5 \leq a \leq 1.0$, $0 \leq b \leq 0.3$, $0 \leq c \leq 0.3$, a+b+c = 1.0, and $1.5 \leq y \leq 2.1$.

**12.** A lithium ion battery **characterized by** comprising the cathode layer according to any one of claims 1 to 11.

FIG. 1

FIG. 2

FIG. 3

**EUROPEAN SEARCH REPORT**

Application Number

EP 26 15 3206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 114256 A (TOYOTA MOTOR CORP) 27 April 2006 (2006-04-27) | 1-6, 10-12 | INV. H01M4/131 |
| Y | * the whole document * ----- | 7-9 | H01M4/36 H01M4/505 |
| Y | US 2021/351404 A1 (XIAO JIE [US] ET AL) 11 November 2021 (2021-11-11) * paragraph [0063] - paragraph [0065] * ----- | 7-9 | H01M4/525 H01M4/62 H01M10/0525 H01M10/42 |

TECHNICAL FIELDS
SEARCHED (IPC)

H01M

The present search report has been drawn up for all claims

| Place of search | Date of completion of the search | Examiner |
|---|---|---|
| Munich | 3 June 2026 | Tylus, Urszula |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 15 3206

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2026

| Patent document cited in search report | Publication date | Patent family member(s) | | Publication date |
|---|---|---|---|---|
| JP 2006114256 A | 27-04-2006 | NONE | | |
| US 2021351404 A1 | 11-11-2021 | CN | 115551808 A | 30-12-2022 |
| | | EP | 4146598 A2 | 15-03-2023 |
| | | JP | 7735313 B2 | 08-09-2025 |
| | | JP | 2023525507 A | 16-06-2023 |
| | | KR | 20230007494 A | 12-01-2023 |
| | | US | 2021351404 A1 | 11-11-2021 |
| | | US | 2024088382 A1 | 14-03-2024 |
| | | WO | 2022026014 A2 | 03-02-2022 |

EPO FORM P0459

**EP 4 787 450 A1**

**Patent documents cited in the description**

- JP 2023104990 A
- JP 2014072072 A
- JP 2004311408 A